# EUROPÄISCHE PATENTSCHRIFT

(11) **EP 0 578 029 B1**
(45) Veröffentlichungstag und Bekanntmachung des Hinweises auf die Patenterteilung: **10.09.1997**
(21) Anmeldenummer: 93109737.2
(22) Anmeldetag: 18.06.1993
(51) Int. Cl.: G01P 5/12, G01P 13/00

(54) **Sensor zum Erfassen der Geschwindigkeit eines strömenden Mediums in einem Laboratoriumsabzug**
Sensor for measuring the speed of a fluid medium in a laboratory extraction system
Capteur de mesure de la vitesse d'écoulement d'un fluide dans un conduit d'aspiration d'un laboratoire

(30) Priorität: 23.06.1992 DE 9208344 U
(43) Veröffentlichungstag der Anmeldung: 12.01.1994
(73) Patentinhaber: Gebrüder Trox, GmbH, D-47506 Neukirchen-Vluyn (DE)
(72) Erfinder: Rohde, Christoph, Dipl.-Ing., D-4300 Essen 1 (DE); Wirooks,Heinz-Georg,Dipl.-Ing., D-4179 Weeze (DE)
(74) Vertreter: Stark, Walter, Dr.-Ing.

(56) Entgegenhaltungen:
- DE-A- 3 935 778
- DE-A- 4 026 998
- US-A- 3 366 942

## Beschreibung

Die Erfindung betrifft einen Sensor zum Erfassen der Geschwindigkeit eines strömenden Mediums in einem Laboratoriumsabzug. An vielen Arbeitsplätzen in Laboratorien können Gase, Dämpfe, Aerosole oder Stäube in gefährlicher Menge oder Konzentration auftreten. Um den Raum bzw. die darin arbeitenden Personen davor zu schützen, wird die Arbeitsfläche allseitig umschlossen und an ein technisches Entlüftungssystem angeschlossen. Die Arbeitsfläche ist mindestens von der Frontseite her gut überschaubar und z.B. über in der Höhe verstellbare Frontschieber oder seitlich verschiebbare Frontscheiben zugänglich. Um einen Austritt der Schadstoffe in das Laboratorium zu vermeiden, wurde bisher die Abluftmenge im Abzug über einen Regler in Abhängigkeit von der Öffnungsstellung des Frontschiebers oder der Frontscheiben gesteuert. Das erlaubt jedoch keine zuverlässige Aussage über die tatsächlichen Strömungsverhältnisse im Abzug.

Aufgabe der Erfindung ist es, in einem Laboratoriumsabzug auch kleinste Geschwindigkeiten richtungsabhängig zu erfassen.

Diese Aufgabe wird gelöst mit einem Sensor der eingangs beschriebenen Gattung, der gekennzeichnet ist durch zwei mit gegenseitigem Abstand im Strömungsrichtung hintereinander angeordnete Heißleiter, durch eine zwischen den beiden Heißleitern angeordnete Strömungsbarriere und durch eine an die beiden Heißleiter angeschlossene Schaltung zum Erzeugen eines Differenzsignals. Heißleiter, die auch aus sogenannten Hitzdrahtsonden bestehen können, reagieren sehr empfindlich auf Änderungen der Strömungsgeschwindigkeit. Bei dem erfindungsgemäßen Sensor trifft die Strömung auf den in Strömungsrichtung ersten Heißleiter und kühlt diesen entsprechend ab. Der zweite Heißleiter ist durch die Strömungsbarriere geschützt und erfährt keine Abkühlung. Das Differenzsignal ist ein Maß für die Strömungsgeschwindigkeit.

Für die Ausbildung der Strömungsbarriere bestehen verschiedene Möglichkeiten. Nach einem Vorschlag der Erfindung kann die Strömungsbarriere ein in den Abzug ragender Kasten sein, an dessen in Strömungsrichtung und gegen die Strömungsrichtung weisenden Seiten die Heißleiter angeordnet sind. Die Strömungsbarriere kann auch aus zwei sich kreuzenden Blechen bestehen, in deren in Strömungsrichtung bzw. gegen die Strömungsrichtung weisenden Kammern die Heißleiter angeordnet sind.

Bei einer einfachen Ausführung besteht die Strömungsbarriere aus einem zwischen den beiden Heißleitern angeordneten und sich quer zur Strömungsrichtung erstreckenden Blech. Die Strömungsbarriere kann aber auch zwei zwischen den Heißleitern angeordneten Blechen bestehen, die als Halbschalben oder Winkelbleche ausgeführt sind. Schließlich kann die Strömungsbarriere auch ein zwischen den Heißleitern angeordnetes Rohr sein.

In allen Fällen wird lediglich der in Strömungsrichtung erste Heißleiter von der Strömung beaufschlagt und gekühlt, während der zweite Heißleiter sich im Windschatten der Strömungsbarriere befindet und durch die Strömung praktisch nicht beaufschlagt wird.

Im folgenden werden in der Zeichnung dargestellte Ausführungsbeispiele der Erfindung erläutert; es zeigen:
- Fig. 1: schematisch einen Längsschnitt durch einen Laboratoriumsabzug,
- Fig. 2: einen Querschnitt durch den Gegenstand nach Fig. 1,
- Fig. 3-7: andere Ausführungen des Gegenstandes nach Fig. 1.

Der in den Figuren schematisch dargestellte Laboratoriumsabzug 1 mag einen kreisförmigen Querschnitt besitzen. Er wird in Strömungsrichtung 2 von Luft durchströmt, die von einer nicht dargestellten Arbeitsfläche abgesaugt wird, welche allseitig bis auf verstellbare Frontschieber oder Frontscheiben umschlossen ist. Im Abzug 1 sind in Strömungsrichtung 2 hintereinander und mit gegenseitigem Abstand zwei Heißleiter 3, 4 angeordnet, zu denen eine nicht dargestellte Schaltung zum Erzeugen eines Differenzsignals angeschlossen ist. Zwischen den beiden Heißleitern befindet sich eine Strömungsbarriere 5.

Während des Betriebes trifft die Luft auf den in Strömungsrichtung 2 ersten, elektrisch beheizten Heißleiter 3 und kühlt diesen entsprechend ab. Der zweite, im Windschatten der Barriere 5 angeordnete, ebenfalls elektrisch beheizte Heißleiter 4 erfährt dagegen keine Abkühlung. Aus den Signalen, die die beiden Heißleiter 3, 4 abgeben, wird ein Differenzsignal gebildet, das ein Maß für die Strömungsgeschwindigkeit ist.

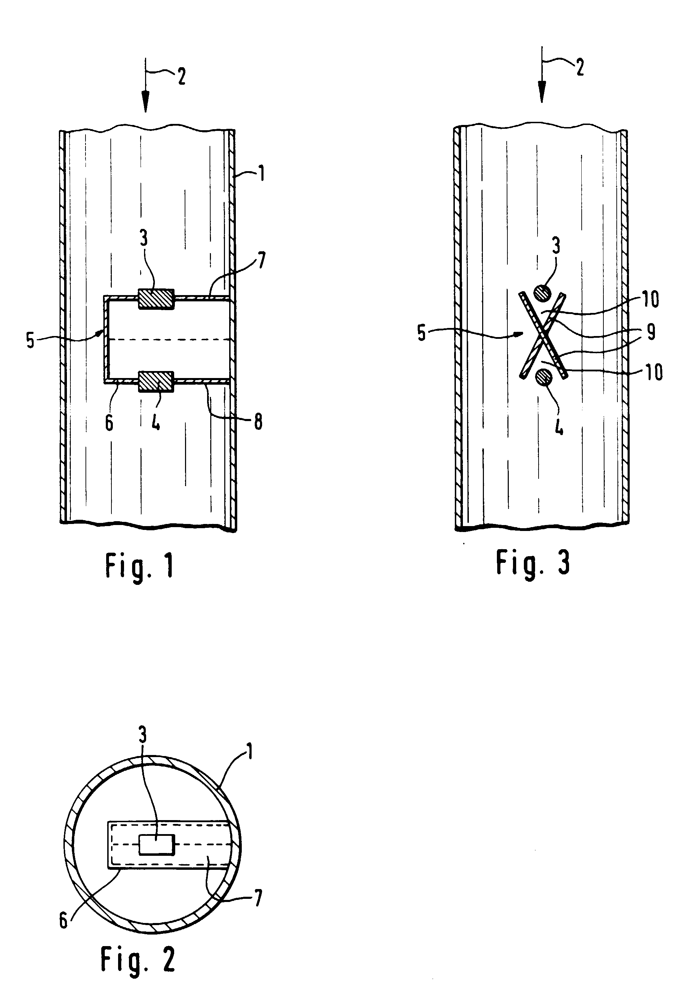

Bei der in den Fig. 1 und 2 wiedergegebenen Ausführung ist die Strömungsbarriere 5 ein teilweise in den Abzug 1 ragender Kasten 6, an dessen gegen die Strömungsrichtung 2 weisender Seite 7 der Heißleiter 3 und an dessen in Strömungsrichtung 2 weisender Seite 8 der Heißleiter 4 angeordnet sind.

Bei der Ausführung nach Fig. 3 wird die Störmungsbarriere 5 von zwei sich kreuzenden Blechen 9 gebildet, in deren gegen die Strömungsrichtung 2 bzw. in Strömungsrichtung 2 weisenden Kammern 10 die Heißleiter 3 bzw. 4 untergebracht sind.

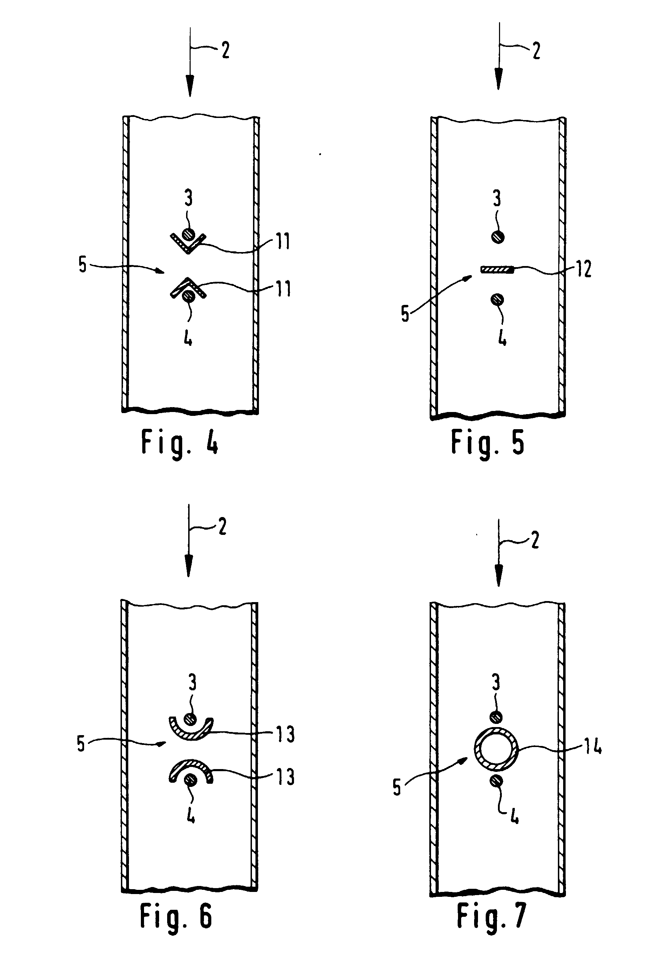

Bei der Ausführung nach Fig. 4 besteht die Strömungsbarriere 5 aus zwei Winkelblechen 11, die sich gegen die Strömungsrichtung 2 bzw. in Strömungsrichtung 2 öffnen und in deren Öffnungswinkel die Heißleiter 3, 4 untergebracht sind.

Bei der Ausführung nach Fig. 5 besteht die Strömungsbarriere 5 aus einem einzigen Blech 12, welches sich quer zur Strömungsrichtung 2 erstreckt.

Bei der Ausführung nach Fig. 6 besteht die Strömungsbarriere 5 aus zwei Halbschalenblechen 13, die sich in Strömungsrichtung 2 bzw. gegen die Strömungsrichtung 2 öffnen und in deren Öffnungen die Heißleiter 3, 4 untergebracht sind.

Bei der Ausführung nach Fig. 7 ist die Strömungsbarriere 5 ein Rohr 14, welches zwischen den beiden Heißleitern 3, 4 angeordnet ist.

## Patentansprüche

1. Sensor zum Erfassen der Geschwindigkeit eines strömenden Mediums in einem Laboratoriumsabzug mit zwei mit gegenseitigem Abstand in Strömungsrichtung (2) hintereinander angeordneten Heißleitern (3, 4) und einer zwischen den beiden Heißleitern (3, 4) angeordneten Strömungsbarriere (5), in deren Windschatten einer der Heißleiter (4 bzw. 3) angeordnet ist, sowie mit einer an die beiden Heißleiter (3, 4) angeschlossenen Schaltung zum Erzeugen eines Differenzsignals.

2. Sensor nach Anspruch 1, dadurch gekennzeichnet, daß die Strömungsbarriere (5) ein in den Abzug (1) ragender Kasten (6) ist, an dessen in Strömungsrichtung (2) und gegen die Strömungsrichtung (2) weisenden Seiten (7, 8) die Heißleiter (3, 4) angeordnet sind.

3. Sensor nach Anspruch 1, dadurch gekennzeichnet, daß die Strömungsbarriere (5) aus zwei sich kreuzenden Blechen (9) besteht, in deren in Strömungsrichtung (2) bzw. gegen die Strömungsrichtung (2) weisenden Kammern (10) die Heißleiter (3, 4) angeordnet sind.

4. Sensor nach Anspruch 1, dadurch gekennzeichnet, daß die Strömungsbarriere (5) aus einem zwischen den beiden Heißleitern (3, 4) angeordneten und sich quer zur Strömungsrichtung (2) erstreckenden Blech (12) besteht.

5. Sensor nach Anspruch 1, dadurch gekennzeichnet, daß die Strömungsbarriere (5) aus zwei zwischen den Heißleitern (3, 4) angeordneten Blechen (11; 13) besteht, die als Winkelbleche oder Halbschalen ausgeführt sind.

6. Sensor nach Anspruch 1, dadurch gekennzeichnet, daß die Strömungsbarriere (5) ein zwischen den Heißleitern (3, 4) angeordnetes Rohr (14) ist.

## Claims

1. Sensor for detecting the speed of a flowing medium in a laboratory extraction system, including two hot conductors (3, 4), which are disposed behind each other with a mutual spacing therebetween, when viewed with respect to the direction of flow (2), and a flow barrier (5), which is disposed between the two hot conductors (3, 4), one of the hot conductors (4 or 3) being disposed in the lee of said barrier, and a circuit, which is connected to the two hot conductors (3, 4) for generating a differential signal.

2. Sensor according to claim 1, characterised in that the flow barrier (5) is a box (6), which protrudes into the extraction system (1) and has the hot conductors (3, 4) disposed on its sides (7, 8), which are orientated in the flow direction (2) and in opposition to the flow direction (2).

3. Sensor according to claim 1, characterised in that the flow barrier (5) comprises two intersecting plates (9), the hot conductors (3, 4) being disposed in the chambers (10) of said plates, which chambers are orientated in the flow direction (2) or in opposition to the flow direction (2).

4. Sensor according to claim 1, characterised in that the flow barrier (5) comprises a plate (12), which is disposed between the two hot conductors (3, 4) and extends transversely relative to the flow direction (2).

5. Sensor according to claim 1, characterised in that the flow barrier (5) comprises two plates (11; 13), which are disposed between the hot conductors (3, 4) and are configured as angular plates or half-shells.

6. Sensor according to claim 1, characterised in that the flow barrier (5) is a pipe (14) disposed between the hot conductors (3, 4).

## Revendications

1. Capteur de mesure de la vitesse d'écoulement d'un fluide dans un conduit d'aspiration d'un laboratoire, avec deux conducteurs chauffants (3, 4) disposés l'un derrière l'autre à distance mutuelle dans la direction d'écoulement (2), et une barrière d'écoulement (5) disposée entre les deux conducteurs chauffants (3, 4), à l'abri de laquelle est disposé un des conducteurs chauffants (4 ou 3), ainsi qu'avec un montage raccordé aux deux conducteurs chauffants (3, 4) pour produire un signal différentiel.

2. Capteur selon la revendication 1, caractérisé en ce que la barrière d'écoulement (5) est une boîte (6) faisant saillie dans le conduit d'aspiration (1), les conducteurs chauffants (3, 4) étant disposés sur les côtés (7, 8) de la boîte (6) qui sont respectivement dirigés dans la direction d'écoulement (2) et à l'encontre de la direction d'écoulement (2).

3. Capteur selon la revendication 1, caractérisé en ce que la barrière d'écoulement (5) est constituée de deux tôles (9) qui se croisent, les conducteurs chauffants (3, 4) étant disposés dans les compartiments (10) séparés par ces tôles qui sont respectivement dirigés dans la direction d'écoulement (2) et à l'encontre de la direction d'écoulement (2).

4. Capteur selon la revendication 1, caractérisé en ce que la barrière d'écoulement (5) est constituée d'une tôle (12) disposée entre les deux conducteurs chauffants (3, 4) et s'étendant transversalement à la direction d'écoulement (2).

5. Capteur selon la revendication 1, caractérisé en ce que la barrière d'écoulement (5) est constituée de deux tôles (11 ; 13) disposées entre les conducteurs chauffants (3, 4), qui sont réalisées sous la forme de tôles en équerre ou de demi-coques.

6. Capteur selon la revendication 1, caractérisé en ce que la barrière d'écoulement (5) est un tube (14) disposé entre les conducteurs chauffants (3, 4).
